(19) Europäisches Patentamt
European Patent Office
Office européen des brevets

(11) Veröffentlichungsnummer: **0 341 325 B1**

(12) # EUROPÄISCHE PATENTSCHRIFT

(45) Veröffentlichungstag der Patentschrift: **11.12.91**

(51) Int. Cl.$^5$: **C09B 37/00**, C09B 67/10, C09B 67/34

(21) Anmeldenummer: **88107409.0**

(22) Anmeldetag: **07.05.88**

(54) **Verfahren zur Herstellung von Flüssigeinstellungen basischer Azofarbstoffe.**

(43) Veröffentlichungstag der Anmeldung:
**15.11.89 Patentblatt 89/46**

(45) Bekanntmachung des Hinweises auf die Patenterteilung:
**11.12.91 Patentblatt 91/50**

(84) Benannte Vertragsstaaten:
**CH FR GB IT LI NL**

(56) Entgegenhaltungen:
**EP-A- 0 036 553**
**EP-A- 0 045 840**
**FR-A- 2 068 684**
**US-A- 2 007 382**
**US-A- 2 022 606**

(73) Patentinhaber: **BASF Aktiengesellschaft**
**Carl-Bosch-Strasse 38**
**W-6700 Ludwigshafen(DE)**

(72) Erfinder: **Schmeidl, Karl, Dr.**
**Rene-Bohn-Strasse 4a**
**W-6700 Ludwigshafen(DE)**

EP 0 341 325 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein neues Verfahren zur Herstellung von Flüssigeinstellungen basischer Azofarbstoffe aus gegebenenfalls substituiertem m-Phenylendiamin durch Diazotieren und Kuppeln in carbonsaurer Lösung, wobei man die Umsetzung in Gegenwart von 0,76 bis 0,95 Mol Nitrit, berechnet als salpetrige Säure und bezogen auf 1 Mol m-Phenylendiamin, durchführt und das resultierende Reaktionsgemisch anschließend auf eine Temperatur von 60 °C bis zur Siedetemperatur des Reaktionsgemischs erwärmt.

Aus der EP-A-36 553 ist bekannt, gegebenenfalls substituiertes m-Phenylendiamin in carbonsaurer Lösung zu diazotieren und kuppeln. Als Diazotierungsreagens wird dabei Natriumnitrit oder Neopentylglykoldinitrit verwendet, wobei als kritische Nitritmenge 0,73 Mol Nitrit, berechnet als salpetrige Säure und bezogen auf 1 Mol m-Phenylendiamin, genannt wird. Nach der Lehre der EP-A-36 553 führt ein Überschreiten dieser Nitritmenge zur Stickstoffabspaltung bei den Flüssigeinstellungen.

Es wurde nun gefunden, daß man Flüssigeinstellungen basischer Azofarbstoffe aus m-Phenylendiamin, das gegebenenfalls durch $C_1$-$C_4$-Alkyl oder $C_1$-$C_4$-Alkoxy substituiert ist, durch Diazotieren und Kuppeln in carbonsaurer Lösung vorteilhaft erhält, wenn man die Umsetzung mit 0,76 bis 0,95 Mol Nitrit, berechnet als salpetrige Säure und bezogen auf 1 Mol m-Phenylendiamin, durchführt und das resultierende Reaktionsgemisch anschließend auf eine Temperatur von 60 °C bis zur Siedetemperatur des Reaktionsgemischs erwärmt.

Überraschenderweise kommt es bei den Flüssigfarbstoffen, die nach dem erfindungsgemäßen Verfahren hergestellt sind, zu keiner Stickstoffabspaltung beim Lagern. Außerdem zeichnen sich die nach dem erfindungsgemäßen Verfahren hergestellten Farbstoffe durch höhere Baderschöpfung und gesteigerte Lagerstabilität aus.

Als Ausgangsprodukt für die Azofarbstoffe dient m-Phenylendiamin, das gegebenenfalls durch $C_1$-$C_4$-Alkyl oder $C_1$-$C_4$-Alkoxy substituiert ist. Vorzugsweise verwendet man unsubstituiertes oder durch eine Methyl- oder Methoxygruppe kernsubstituiertes m-Phenylendiamin. Insbesondere sind zu nennen m-Phenylendiamin, 1-Methyl-2,4-diaminobenzol, 1-Methyl-2,6-diaminobenzol oder 1-methoxy-2,4-diaminobenzol. Es ist auch möglich, Gemische verschiedener m-Phenylendiamine zu verwenden.

In einigen Fällen kann es vorteilhaft sein, bis zu 40 Mol.% des jeweiligen m-Phenylendiamins durch Anilin, das gegebenenfalls durch $C_1$-$C_4$-Alkyl oder $C_1$-$C_4$-Alkoxy substituiert ist, zu ersetzen. Bei der Mitverwendung dieser Monoamine, insbesondere von unsubstituiertem Anilin, wird die Menge an verwendetem Nitrit entsprechend reduziert.

Als Nitrite zum Diazotieren eignen sich z.B. Alkalinitrite, insbesondere jedoch Alkylnitrite, die nach der Reaktion in Lösungsmitteln übergehen. Solche Alkylnitrite sind beispielsweise in der DE-A-2 144 420 beschrieben. Im einzelnen sei beispielsweise Propylenglykoldinitrit, Dipropylenglykoldinitrit oder Neopentylglykoldinitrit genannt. Als Alkalinitrit kommt insbesondere Natriumnitrit in Betracht.

Als Lösungsmittel kommen beispielsweise $C_1$-$C_4$-Alkansäuren in Betracht, die z.B. noch durch Fluor, Chlor, Hydroxy oder Methoxy substituiert sein können. Im einzelnen sei z.B. Fluoressigsäure, Chloressigsaure, Dichloressigsäure, Hydroxyessigsäure oder Methoxyessigsäure genannt. Besonders bevorzugt sind Ameisen-, Essig- oder Propionsäure.

Das Lösungsmedium kann weiterhin Wasser oder andere Lösungsmittel, wie Alkanole, Glykole, Glykolether, Amide oder Ester, z.B. Methanol, Ethanol, Propanol, Isopropanol, Ethylenglykol, Diethylenglykol, Propylenglykol, Dipropylenglykol, Ethylenglykolmonomethyl-, -ethyl-, -propyl- oder -butylether, N,N-Dimethylformamid, N-Methylpyrrolidon oder $\gamma$-Butyrolacton enthalten.

Vorteilhaft enthält das für die Diazotierung und Kupplung verwendete Lösungsmedium ca. 50 bis 90 Gew.%, vorzugsweise 70 bis 80 Gew.% Carbonsäure und als Rest Wasser.

Die Mengenverhältnisse der Reaktionsteilnehmer und Lösungsmittel werden zweckmäßig so gewählt, daß die erfindungsgemäß hergestellten Flüssigeinstellungen der basischen Azofarbstoffe ca. 15 bis 40 Gew.% an Farbstoff aufweisen.

Das erfindungsgemäße Verfahren wird zweckmäßig so durchgeführt, daß man das betreffende m-Phenylendiamin oder das Gemisch der m-Phenylendiamine oder das m-Phenylendiamin/Anilin-Gemisch in carbonsaurer Lösung vorlegt und dann das Diazotierungsmittel zugibt.

Die Zugabe des Nitrits erfolgt bei einer Temperatur von -10 bis +25 °C, vorzugsweise +15 bis +20 °C. Nach beendeter Zugabe wird das Reaktionsgemisch bei dieser Temperatur über einen Zeitraum von 0,5 bis 4 Stunden nachgerührt und anschließend auf eine Temperatur von 60 °C bis zur Siedetemperatur des Reaktionsgemischs erwärmt. Die Siedetemperatur des Reaktionsgemischs liegt im allgemeinen bei etwa 108 °C. Bevorzugt erfolgt die Wärmebehandlung bei einer Temperatur von 70 bis 100 °C, insbesondere bei 80 bis 95 °C. Eine Erhöhung der Temperatur über den Siedepunkt des Reaktionsgemischs hinaus

unter Druck bringt keine Vorteile. Die Wärmebehandlung erfolgt dabei über einen Zeitraum von 1 bis 10, vorzugsweise 3 bis 6 Stunden.

Bei den nach dem erfindungsgemäßen Verfahren hergestellten Farbstoffen handelt es sich in der Regel nicht um einheitliche Farbstoffe, sondern um Gemische von Mono-, Dis- und Polyazofarbstoffen, da die als Ausgangsprodukt verwendeten Diamine und deren Folgeprodukte nicht nur einfach sondern auch mehrfach diazotiert werden und kuppeln können. Die Hauptkomponenten weisen dabei folgende Formel auf

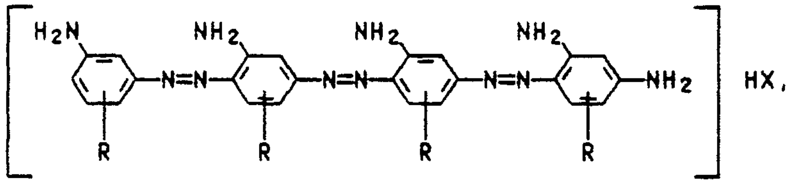

in der R Wasserstoff, $C_1$-$C_4$ oder $C_1$-$C_4$-Alkoxy und HX eine Säure, üblicherweise die als Lösungsmittel dienende Carbonsäure, bedeuten.

Ähnliche Produkte, wie die nach dem erfindungsgemäßen Verfahren erhaltenen Farbstoffe, sind z.B. unter den Namen Bismarckbraun G oder R oder Vesuvin bekannt oder auch in der EP-A-36 553 beschrieben. Sie dienen zur Färbung von Papier, besonders von Altpapier, oder Leder oder auch zum Färben anionisch modifizierter Fasern, beispielsweise von Acrylnitril-Polymerisaten. Durch Abmischen mit anderen basischen Farbstoffen können auch andere Farbtöne, z.B. Schwarz, eingestellt werden.

Die folgenden Beispiele sollen die Erfindung näher erläutern. Die dort aufgeführten Teile sind Gewichtsteile.

Beispiel 1

In 515 Teilen 85 gew.%iger wäßriger Essigsäure wurden 130 Teile 1-Methyl-2,4-diaminobenzol und 70 Teile 1-Methyl-2,6-diaminobenzol unter Rühren aufgelöst. Nach Abkühlen auf 10 bis 20 °C wurden im Verlauf von 4,5 Stunden 122 Teile Neopentylglykoldinitrit hinzugegeben, wobei man durch Außenkühlung dafür sorgte, daß eine Temperatur von 20 °C nicht überschritten wurde. Man rührte anschließend etwa 4 Stunden nach und ließ die Temperatur dabei auf Raumtemperatur ansteigen. Im Verlauf einer weiteren Stunde erhitzte man auf eine Temperatur von 65 °C, ließ dann im Verlauf von weiteren 2 Stunden die Temperatur auf Rückflußtemperatur (108 °C) ansteigen und hielt eine Stunde bei dieser Temperatur. Anschließend kühlte man auf Raumtemperatur ab und filtrierte über ein Klärfilter, wobei sich kein Filterrückstand zeigte. Durch Zugabe von etwa 130 Teilen Essigsäure wurde die gewünschte Farbstärke eingestellt. Man erhielt eine Farbstofflösung, die mit Wasser beliebig verdünnbar ist und die Altpapier rotstichig braun anfärbt. In der Massefärbung war das Abwasser farblos.

Beispiel 2

354 Teile m-Phenylendiamin wurden in einer Mischung aus 844 Teilen Eisessig und 148 Teilen Wasser gelöst. Dann ließ man im Temperaturbereich von 9 bis 15 °C in etwa 4 Stunden 244 Teile Neopentylglykoldinitrit hinzufließen. Im Verlauf von etwa 2 Stunden ließ man die Temperatur des Reaktionsgemisches auf Raumtemperatur ansteigen, erwärmte dann allmählich auf 65 °C, hielt 2 Stunden bei dieser Temperatur und erhitzte dann unter weiterem Rühren etwa 1 Stunde auf 95 °C , kühlte dann ab und verdünnte mit 260 Teilen Eisessig. Die so erhaltene Farbstofflösung ist lagerstabil und mit Wasser mischbar. Gegenüber der in Beispiel 1 erhaltenen Lösung ist die Färbung in der Papiermasse auf Altpapier etwas gelber und reiner. Die Farbstärke ist um ca. 15 % höher. Das Abwasser aus der Papierfärbung war nicht angefärbt.

Anstelle von Eisessig sind auch Ethylendiglykolmonobutylether, Propylenglykol oder Butyrolacton, gegebenenfalls mit Wasser verdünnt, zum Verdünnen geeignet.

Beispiel 3

Man verfuhr analog Beispiel 2, verwendete jedoch anstelle von 244 Teilen nun 212 Teile Neopentylglykoldinitrit und verdünnte nach beendeter Diazotierung und Kupplung mit 292 Teilen 50 gew./iger wäßriger Essigsäure. (Die Verdünnung kann auch mit der gleichen Menge 50 gew.%iger wäßriger Milchsäure durchgeführt werden).

Man erhielt eine lagerstabile Flüssigeinstellung, die mit Wasser beliebig verdünnbar ist. Gegenüber den nach der EP-A-36 553 erhaltenen Produkten ist sowohl die Lagerstabilität als auch die Verdünnbarkeit mit Wasser und das Ziehvermögen auf Papier verbessert.

Beispiel 4

In 516 Teilen 85 gew.%iger wäßriger Essigsäure wurden 177 Teile m-Phenylendiamin gelöst. Man kühlte auf etwa 5 °C ab und gab im Verlauf von etwa zwei Stunden 90,5 Teile Natriumnitrit hinzu. Durch Außenkühlung hielt man die Temperatur unter 15 °C. Anschließend rührte man etwa 1 Stunde nach und erwärmte in etwa 5 Stunden auf 95 °C . Anschließend kühlte man ab und verdünnte mit 141,5 Teilen 50 gew.%iger wäßriger Essigsäure. Man erhielt einen Farbstoff mit ähnlichen Eigenschaften wie in Beispiel 3 beschrieben.

## Patentansprüche

1. Verfahren zur Herstellung von Flüssigeinstellungen basischer Azofarbstoffe aus m-Phenylendiamin, das gegebenenfalls durch $C_1$-$C_4$-Alkyl oder $C_1$-$C_4$-Alkoxy substituiert ist, durch Diazotieren und Kuppeln in carbonsaurer Lösung, dadurch gekennzeichnet, daß man die Umsetzung mit 0,76 bis 0,95 Mol Nitrit, berechnet als salpetrige Säure und bezogen auf 1 Mol m-Phenylendiamin, durchführt und das resultierende Reaktionsgemisch anschließend auf eine Temperatur von 60 °C bis zur Siedetemperatur des Reaktionsgemischs erwärmt.

## Claims

1. A process for preparing a liquid formulation of a basic azo dye from unsubstituted or $C_1$-$C_4$-alkyl- or $C_1$-$C_4$-alkoxy-substituted m-phenylenediamine by diazotizing and coupling in carboxylic acid solution, which comprises performing the reaction with from 0.76 to 0.95 mole of nitrite, calculated as nitrous acid and based on 1 mole of m-phenylenediamine, and then heating the resulting reaction mixture at from 60 °C to the boiling point of the reaction mixture.

## Revendications

1. Procédé d'obtention de préparations liquides de colorants azoïques basiques à partir de m-phenylenediamine qui est substituée éventuellement par alkyle en C 1-C 4 ou alcoxy en C 1-C 4, par diazotation et copulation en solution carboxylée, caractérisé par le fait que l'on effectue la réaction avec 0,76 à 0,95 mol de nitrite, calculé en tant qu'acide nitreux et rapporté à 1 mol de m-phenylenediamine et l'on échauffe ensuite le mélange de réaction résultant à une température de 60 degrés C jusqu'à la température d'ébulliton du mélange de réaction.